# FASCICULE DE BREVET EUROPEEN

(11) **EP 1 935 739 B1**
(45) Date de publication et mention de la délivrance du brevet: **27.06.2012**
(21) Numéro de dépôt: 07301650.3
(22) Date de dépôt: 10.12.2007
(51) Int. Cl.: B60W 30/06, B62D 15/02, B60W 10/20

(54) **Procédé d'automatisation de braquage des roues d'un véhicule automobile lors d'une sortie de ce véhicule d'une place de parking, et système associé**
Verfahren zu Automatisierung des Lenkeinschlags der Reifen eines Kraftfahrzeugs zum Ausparken des Fahrzeugs aus einem Parkplatz und entsprechendes System
Method of automating the steering of the wheels of an automobile when the vehicle comes out of a parking space, and associated system

(30) Priorité: 18.12.2006 FR 0655603
(43) Date de publication de la demande: 25.06.2008
(73) Titulaire: PEUGEOT CITROËN AUTOMOBILES S.A., 78140 Vélizy Villacoublay (FR)
(72) Inventeur: Lefranc, Sébastien, 91370 Verrieres le Buisson (FR)

(56) Documents cités:
- EP-A- 1 498 313
- EP-A- 1 640 213
- WO-A-2004/007232
- WO-A1-2007/079825
- DE-A1- 3 813 083
- DE-A1- 4 333 112
- DE-A1- 19 922 173
- US-B1- 6 275 754

## Description

L'invention concerne un procédé d'automatisation du braquage des roues d'un véhicule automobile lors d'un déplacement de ce véhicule entre deux positions initiale et finale telles qu'une place de parking et un côté de circulation.

L'invention concerne également un système d'automatisation du braquage associé au procédé ci-dessus.

Au sein d'un véhicule automobile, la fonction de direction est assurée par la coopération d'un volant, d'une colonne de direction, d'un pignon, d'une crémaillère et d'une biellette, et agit sur les roues directrices du véhicule, qui sont le plus souvent les roues avant du véhicule.

Afin de réduire les efforts fournis par un conducteur au cours de manoeuvres à faible vitesse de déplacement du véhicule, des dispositifs d'assistance ont été développés.

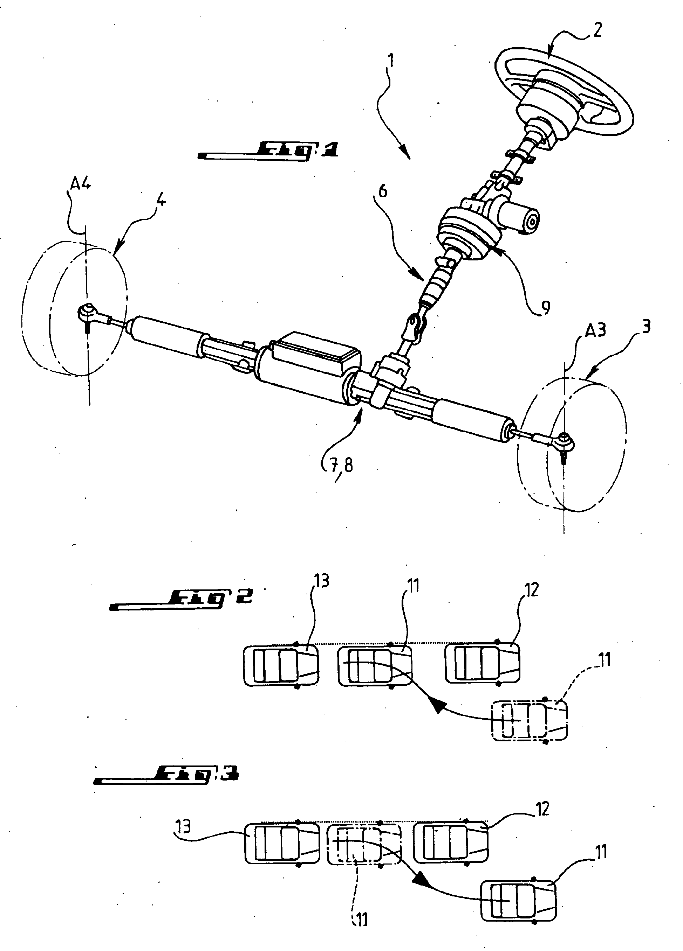

A titre d'exemple, un dispositif de direction assisté 1 de type connu et représenté sur la figure 1, permet de réduire la valeur de l'effort de braquage du volant par le conducteur par génération d'un couple de forces venant se superposer au couple appliqué par le conducteur.

Un tel dispositif comprend, à l'image d'un dispositif de direction classique, un volant de direction 2 lié mécaniquement aux roues directrices 3, 4 du véhicule par l'intermédiaire d'un ensemble à colonne de direction 6, pignon 7 et crémaillère 8. Ainsi, tout braquage du volant 2 entraîne le braquage des roues directrices 3, 4.

En outre, un tel dispositif comprend un moteur électrique 9 interposé entre le volant 2 et les roues directrices 3, 4 du véhicule et étant apte à générer un couple notamment au niveau des axes de pivotement A3, A4 des roues 3, 4, pouvant se superposer aux couples appliqués sur ces axes par actionnement du volant 2 par le conducteur. Du fait de cette assistance électrique, l'effort à fournir par le conducteur pour braquer les roues directrices 3, 4 du véhicule est moins important.

Une application particulière de ce dispositif concerne l'aide au garage en créneau d'un véhicule 11 disposé longitudinalement entre deux autres véhicules 12, 13, et l'aide à la sortie d'une place de parking de type créneau, tels que représentés respectivement sur les figures 2 et 3.

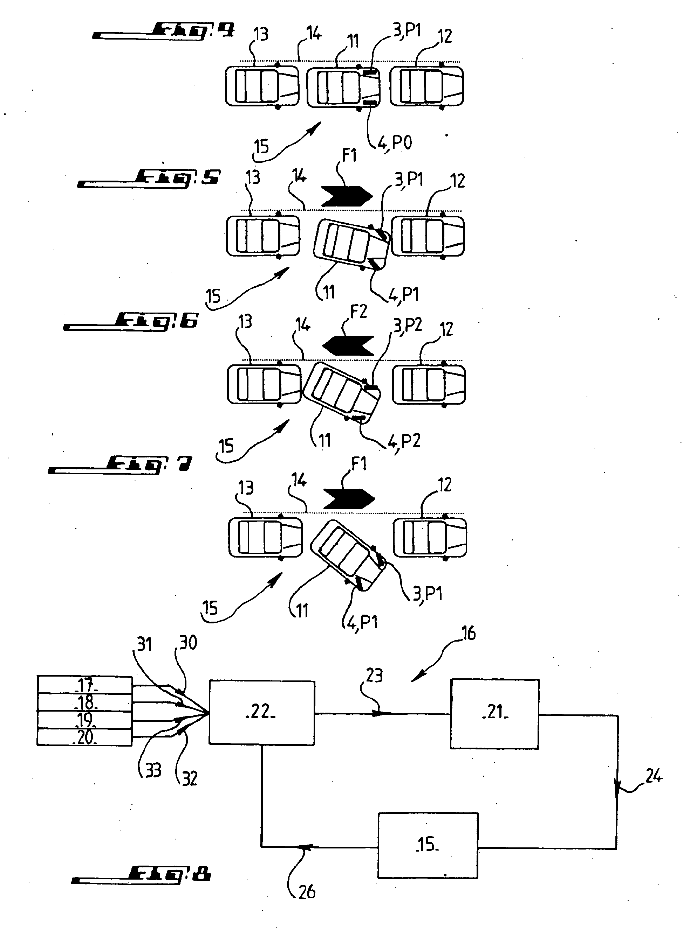

A titre d'exemple, lorsque le véhicule 11 est serré entre deux objets 12, 13, tel que représenté sur la figure 4, il est difficile de sortir de la place de parking.

La sortie de place de parking est alors effectuée selon les trois phases suivantes :
- éloignement du véhicule 11 du trottoir 14 délimitant la chaussée par avancé du véhicule (figure 5), cette première phase consistant à braquer au maximum les roues directrices 3, 4 du véhicule 11 vers le côté de remise en circulation 15 pour qu'elles atteignent une position dite extérieure P1, tout en avançant le véhicule 11 dans le sens repéré par la flèche F1, au plus proche du véhicule 12,
- dégagement du véhicule de la place qu'il occupait par recul de celui-ci (figure 6), le conducteur braquant les roues 3, 4 au maximum vers le trottoir 14 jusqu'à la position dite intérieure P2, tout en reculant le véhicule selon la flèche F2 de la figure 6 au plus proche du véhicule 13,
- remise en circulation du véhicule (figure 7) par braquage maximal des roues 3, 4 vers le côté de remise en circulation 15 du véhicule et par avancée de ce dernier vers ce côté 15.

Ainsi, dans cette situation, chaque manoeuvre de braquage du volant est une manoeuvre de braquage maximum et la réduction de l'effort à fournir par le conducteur est d'autant plus appréciable.

Ainsi, le document US6275754 décrit un procédé d'automatisation du braquage des roues d'un véhicule automobile lors d'un déplacement de ce véhicule entre deux positions initiale et finale, telles qu'une place de parking et un côté de circulation, comprenant les étapes suivantes :
- détection du côté de déplacement du véhicule souhaité par l'utilisateur,
- détection de la direction avant ou arrière du véhicule sélectionnée par un utilisateur,
- détermination des positions angulaires optimales pour les roues directrices du véhicule en fonction du côté de déplacement souhaité et de la direction sélectionnée, calculées par un calculateur en fonction d'une situation de vie courante du véhicule telle que déterminée par des capteurs d'environnement,
- déplacement automatisé des roues du véhicule à leur position angulaire optimale.

Ainsi, le document EP1640213 décrit l'usage d'un bouton d'activation actionnable manuellement par l'utilisateur, l'activation du système par le bouton étant autorisée lorsque le véhicule est détecté comme étant positionné longitudinalement entre deux obstacles par les capteurs d'environnement.

Toutefois, le nombre de manoeuvres nécessaires à la remise en circulation du véhicule reste important et rend en conséquence leur mise en oeuvre pénible.

On connaît également du document WO2007/079825, considéré comme l'art antérieur le plus proche, un procédé d'assistance de direction semi-automatique pour la sortie d'un emplacement de parking conforme au préambule de la revendication 1.

Cependant, ce document ne prend pas en compte toutes les informations de l'environnement du véhicule avant d'entamer la manoeuvre de sortie de l'emplacement.

L'invention vise à palier cet inconvénient.

A cet effet, l'invention concerne un procédé d'automatisation du braquage des roues d'un véhicule automobile lors d'un déplacement de ce véhicule pour l'aide à la sortie d'une place de parking de type créneau jusqu'à un côté de circulation, conforme à la partie caractérisante de la revendication 1.

Selon une autre caractéristique, la détection du côté de déplacement souhaité est effectuée par acquisition d'un signal provenant d'un indicateur de changement de position du véhicule, tel qu'un clignotant droit ou gauche.

De préférence, le procédé comprend une étape de vérification d'une condition de non arrêt et une répétition des étapes de détection de la marche avant/arrière sélectionnée, de détermination des positions angulaires optimales et du déplacement des roues directrices tant que la condition de non arrêt est vérifiée.

Avantageusement, la condition de non arrêt est vérifiée lorsque la vitesse de déplacement du véhicule est inférieure à une valeur de vitesse seuil et/ou lorsque le couple de forces appliqué au volant est inférieur à une valeur de couple seuil.

L'invention concerne également un système d'automatisation du braquage des roues d'un véhicule automobile lors d'un déplacement de ce véhicule entre deux positions initiale et finale, telles qu'une place de parking et un côté de circulation. Ledit système comprend :
- un indicateur d'un côté de déplacement souhaité par le conducteur, tel qu'un clignotant,
- un capteur de la direction avant ou arrière sélectionnée par un utilisateur,
- un calculateur apte à recueillir les informations de l'indicateur et du capteur de direction et à y faire correspondre une position angulaire optimale pour les roues directrices du véhicule, à déterminer une consigne représentative des positions angulaires optimales,
- un actionneur du pivotement des roues du véhicule apte à déplacer ces roues à leurs positions définies par la consigne, indépendamment des agissements de l'utilisateur,

Selon l'invention, ledit système comprend en outre un bouton d'activation actionnable manuellement par l'utilisateur, l'activation du système par le bouton étant autorisée lorsque le véhicule est détecté comme étant positionné longitudinalement entre deux obstacles par les capteurs d'environnement.

Selon un autre mode de réalisation possible, l'actionneur est de type électrique.

L'actionneur est avantageusement asservi sur les positions courantes des roues de manière à atteindre les positions optimales.

L'invention sera mieux comprise, et d'autres caractéristiques et avantages de celle-ci apparaîtront au cours de la description suivante, faite en référence aux figures annexées, parmi lesquelles :
- la figure 1 précitée représente une vue d'ensemble d'un dispositif connu de direction d'un véhicule automobile pourvu d'un actionneur électrique ;
- la figure 2 susmentionnée est une vue schématique représentant le garage d'un véhicule automobile muni du dispositif de la figure 1 dans une place située longitudinalement entre deux véhicules ;

- la figure 3 précitée est une vue analogue à la figure 2 et illustrant la remise en circulation du véhicule jusqu'à un côté de circulation ;
- les figures 4 à 7 susmentionnées détaillent les phases de remise en circulation de la figure 3 parmi lesquelles :
   * une configuration initiale dans laquelle le véhicule est garé longitudinalement entre deux véhicules (figure 4) ;
   * une première phase de remise en circulation (figure 5) ;
   * une deuxième phase de remise en circulation (figure 6) ;
   * une troisième phase de remise en circulation (figure 7) ;
- la figure 8 est une illustration schématique du système mettant en oeuvre le procédé selon l'invention.

Le système d'automatisation selon l'invention est utilisé pour simplifier les manoeuvres effectuées par un utilisateur d'un véhicule automobile à faible vitesse.

Ce système est plus particulièrement mis en oeuvre pour les roues directrices 3, 4 du véhicule 11 qui sont les roues avant pour un véhicule à deux roues motrices.

A cet effet, tel que représenté sur la figure 8, le système d'automatisation 16 selon l'invention, comprend un bouton d'activation 17 actionnable manuellement par le conducteur, un indicateur 18 du côté de déplacement du véhicule souhaité par le conducteur, un capteur 19 de la direction avant ou arrière sélectionnée par l'utilisateur et des capteurs d'environnement 20 aptes à estimer la position courante du véhicule par rapport à son environnement.

Le système comprend en outre un actionneur automatisé 21, faisant par exemple partie d'un dispositif de direction assistée du véhicule, permettant d'actionner l'ensemble de direction 15 indépendamment des agissements du conducteur sur le volant 2.

Plus précisément, cet actionneur 21 est apte déplacer par pivotement autour d'un axe vertical les roues directrices 3, 4 du véhicule 11, et le volant 2 de façon concomitante, à des positions particulières de façon automatique.

Dans ce qui suit, l'actionneur est décrit comme étant de type électrique mais le système selon l'invention fonctionne avec tout autre type d'actionneur pouvant remplir la fonction ci-dessus et notamment avec un actionneur de type hydraulique.

De plus, le système selon l'invention comprend un calculateur 22 apte à recueillir les informations du bouton d'activation 17, de l'indicateur 18, du capteur de direction 19 et des capteurs d'environnement 20, à y faire correspondre des positions angulaires optimales pour les roues directrices du véhicule et à calculer une consigne 23 à transmettre à l'actionneur 21, représentative des positions angulaires optimales calculées.

Il est à noter que pour l'application particulière de sortie de place de parking de type créneau, la position angulaire optimale est généralement fixée à une position de braquage maximum des roues directrices, étant donné que les manoeuvres nécessaires dans ce cas sont des manoeuvres du volant en butée.

Ainsi, lorsque la marche avant du véhicule est sélectionnée par l'utilisateur, le calculateur émet une consigne de commande du déplacement des roues à leurs positions braquées au maximum vers le côté de déplacement souhaité par l'utilisateur 15.

Au contraire, lorsque la marche arrière du véhicule est sélectionnée, la consigne transmise à l'actionneur par le calculateur est une commande du déplacement des roues à leurs positions braquées au maximum vers le côté opposé 14 au côté de déplacement souhaité par l'utilisateur 15.

Pour un actionneur électrique, cette consigne 23 peut être constituée par le temps d'application et le signe du courant d'alimentation de l'actionneur.

Dans ce cas, le calculateur 22 intègre des tables établissant une correspondance entre un temps d'application d'un courant de commande du moteur et une position angulaire particulière des roues directrices du véhicule et entre un signe du courant et un sens de pivotement des roues.

L'actionneur 21 est apte à intégrer la consigne 23 émise par le calculateur et à transmettre à l'ensemble de direction 15 une information 24 de pilotage des roues directrices du véhicule à la position angulaire correspondant à cette consigne 23, c'est-à-dire la position angulaire optimale.

Avantageusement, un signal 26 représentatif de la position courante du volant (ou de la position des roues directrices du véhicule, qui en est l'équivalent) peut être retourné au calculateur 22.

Dans ce cas, à partir de la position optimale angulaire des roues calculée et de la position courante mesurée du volant (ou des roues), on effectue un asservissement en boucle fermée pour recalculer le temps d'application et le signe du courant moteur nécessaire pour ajuster la position courante du volant (ou des roues) à la position optimale souhaitée.

En référence aux figures 4 à 8, on décrit dans ce qui suit l'application particulière du procédé d'automatisation associé au système selon l'invention, visant à sortir un véhicule d'un environnement restreint tel qu'une place de parking de type créneau.

Un conducteur désirant sortir d'une place de parking de type créneau telle que représentée sur la figure 4, à l'aide du système selon l'invention, indique le côté de la chaussée vers lequel il veut diriger son véhicule pour sortir de la place de parking.

Cette indication 30 peut consister en un actionnement du clignotant du véhicule vers le côté de remise en circulation, à savoir vers la droite pour l'exemple des figures.

Par cet actionnement, le système selon l'invention détecte le côté souhaité de déplacement du véhicule, (étape (a)).

Une seconde étape du procédé selon l'invention concerne la détection de l'actionnement manuel (b) par l'utilisateur du bouton d'activation du prévu à cet effet 17.

Ce bouton 17 peut être relié au calculateur 22 par un réseau CAN ou en filaire et transmet une information 31 au calculateur 22 représentative du souhait d'activation du système.

Avantageusement, le procédé comprend une étape de vérification de la présence d'obstacles à l'avant et à l'arrière du véhicule (c), au moyen des capteurs d'environnement 20.

Cette étape (c) est optionnelle et permet de n'activer le système que si le véhicule est dans une situation de référence, selon laquelle il est positionné longitudinalement entre deux obstacles.

Pour l'exemple de la figure 4, les capteurs d'environnement 20 transmettent une information 32 selon laquelle la situation courante du véhicule remplit les conditions d'activation du système.

Etant donné que le bouton d'activation 17 est actionné et que le véhicule est détecté comme étant positionné longitudinalement entre deux obstacles, le système selon l'invention peut être activé.

L'utilisateur choisit alors une direction de déplacement du véhicule en actionnant le levier de vitesse dans un premier temps vers la fonction « marche avant du véhicule » dans l'exemple décrit.

Le capteur 19 associé au levier de vitesse transmet une information 33 au calculateur 22, permettant une détection de la direction du véhicule sélectionnée par l'utilisateur (étape (d)).

Le calculateur 22, ayant reçu du clignotant 18, l'information relative au côté de déplacement souhaité 31 (droit), du capteur de direction 19, l'information correspondant à la direction de déplacement sélectionnée 33 (vers l'avant), détermine la consigne 23 de position angulaire optimale des roues correspondant à ces informations 31, 33 (étape (e)).

L'actionneur électrique, ayant reçu cette consigne, déplace par pivotement les roues directrices du véhicule à leurs positions braquées au maximum vers la droite, provoquant de façon concomitante le braquage au maximum vers la droite du volant de direction. Ce déplacement des roues à leurs positions angulaires optimales constitue la sixième étape du procédé selon l'invention (f).

Comme visible sur la figure 5, l'utilisateur avance le véhicule 11 jusqu'à l'obstacle le précédant en s'éloignant du trottoir de la chaussée.

Conformément à la figure 6, et de façon analogue à la description des étapes ci-dessus, le procédé selon l'invention est utilisé pour braquer automatiquement les roues du véhicule au maximum vers la gauche lorsque la fonction marche arrière est sélectionnée par l'utilisateur.

Plus précisément, une fois que l'utilisateur a enclenché la marche arrière du véhicule, le capteur associé au levier de vitesses transmet au calculateur 22 l'information correspondante 33, et le calculateur 22 y fait correspondre une consigne de braquage des roues directrices au maximum vers la gauche.

Cette consigne 24 est transmise à l'actionneur 21 qui déplace les roues directrices du véhicule et le volant en conséquence, à leurs positions braquées au maximum vers la gauche.

L'utilisateur recule alors le véhicule jusqu'à l'obstacle qu'il devance en s'éloignant encore du trottoir 14.

Tant que les conditions de non arrêt du système sont remplies, c'est-à-dire tant que la vitesse du véhicule est inférieure à un seuil tel que 5 km.h¹, et que le couple de force exercé sur le volant reste faible, le système selon l'invention commandera selon la septième étape (g), la rotation du volant et le pivotement correspondant des roues, en fonction de la direction sélectionnée par l'utilisateur par répétition des étapes (d) à (e) ci-dessus décrites.

Avantageusement, le procédé d'automatisation comprend une étape de mesure des positions courantes des roues du véhicule, de comparaison des valeurs mesurées avec les positions optimales déterminées par le calculateur et de régulation du temps et du signe du courant à fournir à l'actionneur pour que les positions courantes des roues atteignent les positions optimales déterminées (h).

Plus particulièrement, lorsque la position courante mesurée d'une roue est plus proche de la position neutre de cette roue que de la position optimale calculée, le calculateur 22 envoie à l'actionneur 21 une information 23 pour continuer le braquage de cette roue vers la position calculée.

Au contraire, lorsque la position courante mesurée est plus proche de la position de braquage maximum que la position optimale calculée, l'information 23 fournie à l'actionneur peut consister en une commande d'arrêt du braquage ou de commande de braquage des roues dans le sens inverse.

Les étapes (b) à (g) continuent jusqu'à ce que le conducteur reprenne le volant en main, ou augmente la vitesse du véhicule au dessus d'une valeur seuil telle que 5 km.h⁻¹.

Au moyen des différents éléments décrits ci-dessus, le procédé d'automatisation selon l'invention et le système associé permettent d'éviter à l'utilisateur les manoeuvres pénibles et répétitives de braquage au maximum du volant jusqu'au dégagement du véhicule.

En outre, ces procédé et système ne sont pas limités à l'exemple particulier de la sortie de parking mais peuvent être utilisés pour toute autre manoeuvre du véhicule dans lesquelles une automatisation du braquage du volant pourrait soulager les efforts du conducteur, telle qu'une entrée au sein d'une place de parking.

Dans ce cas, les positions angulaires optimales de braquage ne seraient pas forcément des positions de braquage maximales mais pourraient être calculées par le calculateur en fonction de la situation de vie courante du véhicule telle que déterminée par les capteurs d'environnement.

## Revendications

1. Procédé d'automatisation du braquage des roues d'un véhicule automobile lors d'un déplacement de ce véhicule pour l'aide à la sortie d'une place de parking de type créneau jusqu'à un côté de circulation (15), comprenant les étapes suivantes :
- détection du côté de déplacement (15) du véhicule souhaité par l'utilisateur (a),
- détection de la direction avant ou arrière du véhicule sélectionnée par un utilisateur (d),
- détermination des positions angulaires optimales pour les roues directrices (3, 4) du véhicule en fonction du côté de déplacement souhaité (15) et de la direction sélectionnée (e), calculées par un calculateur (22) en fonction d'une situation de vie courante du véhicule telle que déterminée par des capteurs d'environnement (20),
- déplacement automatisé des roues (3, 4) du véhicule à leur position de braquage maximal des roues (f) relativement à une position neutre du côté du déplacement du véhicule souhaité (15) lorsque la marche avant du véhicule est sélectionnée et du côté opposé (14) au côté de déplacement souhaité (15) lorsque la marche arrière est sélectionnée,
ledit procédé étant **caractérisé en ce qu'**il comporte une étape préalable d'autorisation des étapes (d), (e), (f) si le véhicule est estimé comme étant couramment positionné longitudinalement entre deux obstacles.

2. Procédé selon la revendication 1, dans lequel la détection du côté de déplacement souhaité (a) est effectuée par acquisition d'un signal (31) provenant d'un indicateur de changement de position du véhicule (18), tel qu'un clignotant droit ou gauche du véhicule.

3. Procédé selon l'une des revendications précédentes, comprenant une étape de vérification d'une condition de non arrêt (g) et une répétition des étapes (d), (e), (f) tant que la condition de non arrêt est vérifiée.

4. Procédé selon la revendication 3, dans lequel la condition de non arrêt est vérifiée lorsque la vitesse de déplacement du véhicule est inférieure à une valeur de vitesse seuil et/ou lorsque le couple de forces appliqué au volant est inférieur à une valeur de couple seuil.

5. Système d'automatisation du braquage des roues d'un véhicule automobile lors d'un déplacement de ce véhicule pour l'aide à la sortie d'une place de parking de type créneau jusqu'à un côté de circulation, comprenant :
- un indicateur (18) d'un côté de déplacement souhaité par le conducteur, tel qu'un clignotant,
- un capteur (19) de la direction avant ou arrière sélectionnée par un utilisateur,
- des capteurs d'environnement (20),
- un calculateur (22) apte à recueillir les informations de l'indicateur (18), du capteur de direction (19) et des capteurs d'environnement (20),
- un actionneur (21) relié au calculateur, et apte à déplacer en pivotement les roues du véhicule dans une position de braquage maximal des roues relativement à une position neutre du côté du déplacement du véhicule souhaité (15) lorsque la marche avant du véhicule est sélectionnée et du côté opposé (14) au côté de déplacement souhaité (15) lorsque la marche arrière est sélectionnée, indépendamment des agissements de l'utilisateur,
**caractérisé en ce qu'**il comprend en outre un bouton d'activation actionnable manuellement par l'utilisateur, l'activation (17) du système par le bouton (17) étant autorisée lorsque le véhicule est détecté comme étant positionné longitudinalement entre deux obstacles par les capteurs d'environnement (20).

6. Système selon la revendication 5, dans lequel l'actionneur est de type électrique.

## Claims

1. A method of automating the steering of the wheels of a motor vehicle when moving this vehicle to assist in exiting a parallel parking space as far as a traffic lane (15), comprising the following steps:
- detecting the side of movement (15) of the vehicle desired by the user (a),
- detecting whether the vehicle's forward or reverse direction has been selected by a user (d),
- determining the optimal angular positions for the steerable wheels (3, 4) of the vehicle according to the desired side of movement (15) and selected direction (e), calculated by a calculator (22) according to a situation regularly encountered by the vehicle as determined by environmental sensors (20),
- automatically moving the wheels (3, 4) of the vehicle to their maximum optimal angular position (f) in relation to a position neutral to the desired side of movement of the vehicle (15) when the forward gear of the vehicle is selected and to the side (14) opposite the desired side of movement (15) when the reverse gear is selected,
said method being **characterised in that** it comprises a prior step for authorising steps (d), (e) and (f) if the vehicle is estimated as being regularly positioned longitudinally between two obstacles.

2. A method according to claim 1 wherein the detection of the desired side of movement (a) is performed by acquiring a signal (31) originating from a position change indicator of the vehicle (18), such as the vehicle's right or left indicator light.

3. A method according to one of the previous claims, comprising a step for verifying a non-stop condition (g) and the repetition of steps (d), (e) and (f) when the non-stop condition has been verified.

4. A method according to claim 3 wherein the non-stop condition is verified when the vehicle's moving speed is less than a threshold speed value and/or when the torque applied to the steering wheel is less than a threshold torque value.

5. A system of automating the steering of the wheels of a motor vehicle when moving this vehicle to assist in exiting a parallel parking space as far as a traffic lane, comprising:
- an indicator (18) indicating the driver's desired side of movement, such as an indicator light,
- a sensor (19) for detecting whether the forward or reverse direction has been selected by a user,
- environmental sensors (20),
- a calculator (22) capable of collecting information from the indicator (18), the direction sensor (19) and the environmental sensors (20),
- an actuator (21) connected to the calculator and capable of moving the wheels of the vehicle by pivoting motion to their maximum optimal angular position in relation to a position neutral to the desired side of movement of the vehicle (15) when the forward gear of the vehicle is selected and to the side (14) opposite the desired side of movement (15) when the reverse gear is selected, independently of the user's actions,
**characterised in that** it also comprises an activation button that can be manually operated by the user, the activation (17) of the system via this button (17) being permitted when the vehicle is detected as being positioned longitudinally between two obstacles by the environmental sensors (20).

6. A system according to claim 5 wherein the actuator is electric.

## Patentansprüche

1. Verfahren zum Automatisieren des Einschlags der Räder eines Kraftfahrzeuges bei einer Bewegung dieses Fahrzeuges zur Unterstützung beim Verlassen eines Parkplatzes in der Art einer Parklücke bis zu einer Verkehrsseite (15), umfassend die folgenden Schritte:
- Erfassung der vom Benutzer (a) gewünschten Fortbewegungsseite (15) des Fahrzeuges,
- Erfassung der Vorwärts- oder Rückwärtsrichtung des Fahrzeuges, die von einem Benutzer (d) ausgewählt wird,
- Bestimmung der optimalen Winkelstellungen für die gelenkten Räder (3, 4) des Fahrzeuges in Abhängigkeit von der gewünschten Fortbewegungsseite (15) und der ausgewählten Richtung (e), die von einem Rechner (22) in Abhängigkeit von einer gängigen Betriebssituation des Fahrzeugs berechnet werden, wie sie von den Umgebungssensoren (20) bestimmt wird,
- automatische Bewegung der Räder (3, 4) des Fahrzeuges in ihre maximale Einschlagposition der Räder (f) in Bezug auf eine neutrale Stellung auf Seiten der gewünschten Fortbewegungsseite (15), wenn der Vorwärtsgang des Fahrzeuges eingelegt ist, und auf die entgegengesetzte Seite (14) zur gewünschten Fortbewegungsseite (15), wenn der Rückwärtsgang des Fahrzeuges eingelegt ist,
wobei das besagte Verfahren **dadurch gekennzeichnet ist, dass** es einen vorbereitenden Schritt zur Freigabe der Schritte (d), (e), (f) umfasst, wenn das Fahrzeug so eingeschätzt wird, dass es häufig längs zwischen zwei Hindernissen positioniert ist.

2. Verfahren nach Anspruch 1, bei dem die Erfassung der gewünschten Fortbewegungsseite (a) durch die Aufnahme eines Signals (31) aus einem Stellungswechselanzeiger des Fahrzeuges (18), wie einem rechten oder linken Blinker des Fahrzeuges durchgeführt wird.

3. Verfahren nach einem der vorherigen Ansprüche, umfassend einen Schritt zur Überprüfung einer Nicht-Stopp Bedingung (g) und einer Wiederholung der Schritte (d), (e), (f), solange die Nicht-Stopp Bedingung überprüft wird.

4. Verfahren nach Anspruch 3, bei dem die Nicht-Stopp Bedingung überprüft wird, wenn die Fortbewegungsgeschwindigkeit des Fahrzeuges kleiner einem Geschwindigkeitsgrenzwert ist und/ oder wenn das Kraftmoment, das auf das Lenkrad ausgeübt wird, kleiner einem Momentgrenzwert ist.

5. System zum Automatisieren des Einschlags der Räder eines Kraftfahrzeuges bei einer Bewegung dieses Fahrzeuges zur Unterstützung beim Verlassen eines Parkplatzes in der Art einer Parklücke bis zu einer Verkehrsseite, umfassend:
- einen Anzeiger (18) einer vom Lenker gewünschten Seite der Fortbewegung des Fahrzeugs, wie ein Blinker,
- einen Sensor (19) der Vorwärts- oder Rückwärtsrichtung des Fahrzeuges, die von einem Benutzer ausgewählt wird,
- Umgebungssensoren (20),
- einen Rechner (22), der in der Lage ist, die Informationen des Anzeigers (18), des Richtungssensors (19) und der Umgebungssensoren (20) zu empfangen,
- ein Wirkglied (21), das mit dem Rechner verbunden, und in der Lage ist, die Räder des Fahrzeuges schwenkend in eine maximale Einschlagposition der Räder in Bezug auf eine neutrale Stellung auf Seiten der gewünschten Fortbewegungsseite (15) zu bewegen, wenn der Vorwärtsgang des Fahrzeuges eingelegt ist, und auf die entgegengesetzte Seite (14) zur gewünschten Fortbewegungsseite (15), wenn der Rückwärtsgang des Fahrzeuges eingelegt ist, unabhängig von den Handlungen des Benutzers,
**dadurch gekennzeichnet, dass** es darüber hinaus einen Aktivierungsknopf umfasst, der vom Benutzer von Hand betätigt werden kann, wobei die Aktivierung (17) des Systems durch den Knopf (17) freigegeben wird, wenn das Fahrzeug von den Umgebungssensoren (20) als längs zwischen zwei Hindernissen positioniert erfasst wird.

6. System nach Anspruch 5, bei dem das Wirkglied ein elektrisches ist.
